# EUROPEAN PATENT APPLICATION

(11) **EP 2 028 316 A2**
(43) Date of publication of application: **25.02.2009**
(21) Application number: 08104966.0
(22) Date of filing: 05.08.2008
(51) Int. Cl.: D06M 17/00, D06Q 1/02

(54) **Production of a design laminated fabric**

(30) Priority: 23.08.2007 TR 200705860
(71) Applicant: Kuçukcalik Tekstil Sanayi ve Ticaret Anonim Sirketi, 16425 Bursa (TR)
(72) Inventor: Yildirim, Rafet KUÇUKCALIK TEKSTIL SANAYI, 3.Cadde Inegol 16425 Bursa (TR)
(74) Representative: Iskender, Ibrahim

(57) **Abstract**

The invention relates to a design lamination fabric production method applied to fabric mixtures of polyester + cellulose (cotton, viscose) consisting of lamination of the fabrics in lamination unit (2) and it is **characterized in that** it consists the steps of application of chemicals as appropriate to the designs to be preferably applied to the fabrics laminated to each other in the chemical agent application unit (3), application of burning/corrosion process by means of reaction of laminate fabric subjected to dried chemical application with hot air in the condense unit (5).

## Description

### The Related Art

The invention relates to fabric printing methods used in textile.

The invention particularly relates to design lamination fabric production method applied to fabrics composed of polyester + cellulose (cotton, viscose) mixture.

### Background of the related art

Today there are different printing types applied onto fabrics. The most known of them are reactive, rongane, pigment, disperse, burning printings etc. The said printing types of the related art can be applied to non-laminate fabrics. However, burning printing method cannot be applied particularly to laminate fabrics. Burning printing method is the process of wearing the fabric as appropriate to the desired pattern by means of a chemical component in the design and method.

The patent numbered TR 2002/00637 applied today is entitled "conduct of color printing, devore and flog printing" relates to applying color printing, devore and flog printing onto the same fabric (1) together, and relates to printing of acid onto fabric surface fibers (6) of two far fiber fabric, to be burnt by help of form after printing through color printing form, printing of flog paints (4, 5) onto surface of fabric (1) for adhering in perpendicular angle, fixing the fabric (1) at 180 degrees, printing by help of static electric or removing the fibers (3) from the acid burnt surface by help of brush or washing and obtaining polyester fibers (7) and thus obtaining both transparent and velvet appearance.

The patent numbered EP1591577 entitled "Method for producing a printed textile band" relates to a method for producing a printed fabric band (10) wherein the at least one or more color (21 to 25) printing isf ormed on at least one side of the fabric (31) and at least one design (18) of a color different from printing is formed on this surface (31) of the band (19) and it is characterized in that the line (10.1) to form the band (10) later and to have the desired figure (18) is made of two different materials, that the material of the first band (11) absorbing the sublimation inks (21 to 25) extends in a manner covering all areas to be formed by the printing design (26) on the surface (31) of the band, that the area where the shape (18) is contains a second band material (12), that the printed band (11) has a printed image of at least one or more colours printed in a digital printing technique by sublimation inks (21 to 25) against a link (10.1) which will subsequently form the band. The sublimation inks (21 to 25) are absorbed on one side (31) of the link (10.1) to produce the printed image and that the materials design (18) not admitting sublimation inks (21 to 25) consisting of the second band material (12) is in contact with sublimation dyes (21 to 25) in the area where the design is formed (18) but not absorbing it and thus that no change in the design on the line (10.1) occurs.

In conclusion, existence of need for method to produce design lamination fabric applied to fabrics of polyester + cellulose (cotton, viscose) and insufficiency of the existing solutions as seen from the above patents have necessitated a development in the related art.

### Purpose of the Invention

From the current status of the related art, the purpose of the invention is to achieve a burn printing on the fabrics made of polyester + cellulose mixture glued to each other by lamination method.
Another purpose of the invention is to apply a corrosive chemical agent by means of template upon adherence of the fabric.
A further purpose of the invention is to realize a burning process following reaction of the chemical with the fabric in the condense unit.
Another purpose of the invention is to provide saving in labor and time by means of easy to apply method.
A further purpose of the invention is to provide lower operating cost.
The structural and characteristics features of the invention and all advantages will be understood better in detailed descriptions with the figures given below and with reference to the figures, and therefore, the assessment should be made taking into account the said figures and detailed explanations.

### Brief Description of Figures

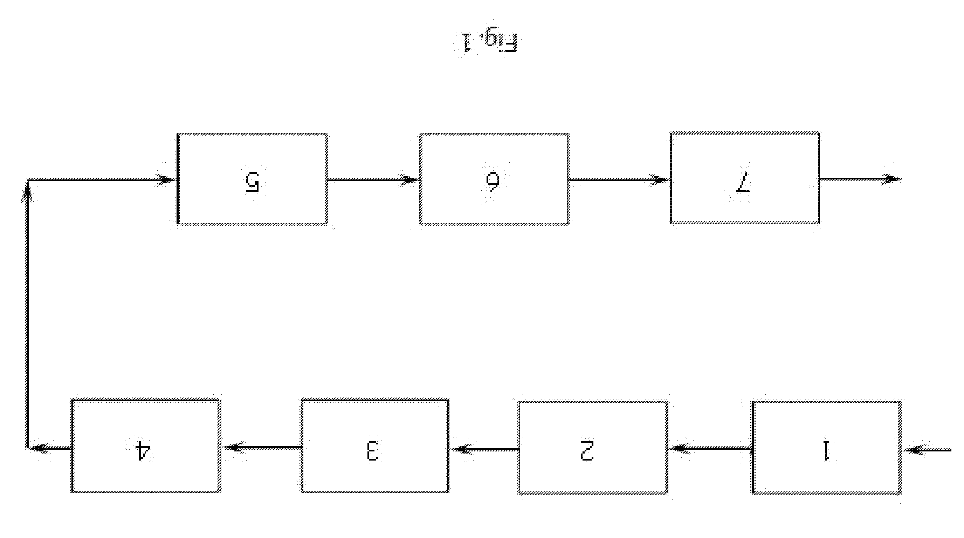

Figure 1 shows process chart for design lamination fabric production.

### Reference Numbers

1. Fabric input unit
2. Lamination unit,
3. Chemical agent application unit,
4. I. drying unit,
5. Condense unit,
6. Washing unit,
7. Final drying unit,

### Detailed Description of the Invention

In order to eliminate the disadvantages and shortcoming in the current status of the related art, the invention relates a design lamination fabric production method applied to fabric mixtures of polyester + cellulose (cotton, viscose)
Method to obtain design by use of burn method applied in laminated fabrics of polyester + cellulose (cotton, viscose) consists of the following steps:
- Input of polyester and cellulose (cotton , viscose) fabrics from fabric inlet unit (1),
- Lamination of the fabrics to each other by means of applying laminating material in between two layers of each fabric in the lamination unit (2) after inlet unit (1),
- Application of corrosive chemicals to the designs to be applied preferably in chemical to the laminated fabrics in chemical agent application unit (3),
- Drying the laminated fabric after burning/corrosive chemical agent application in the I. drying unit (4),
- Application of burning/corrosion process by means of reaction of laminate fabric subjected to dried chemical application with air of about 150 °C in the condense unit (5),
- Washing the fabric undergone chemical and hot air reaction in condense unit (5) in the washing unit (6) and disposal of burnt/corroded parts,
- Drying the fabrics freed from burnt parts in final drying unit (7).

Figure 1 shows the process chart of the design lamination fabric production method. As seen from the figure, polyester fabric is subjected to lamination with content of cellulose content (cotton, viscose) in the said lamination unit (2). Lamination process is the process to covering of the viscose, cotton fabric by means of applying gluing onto the polyester fabric. Following this process, a fabric as a mixture of polyester + cotton/viscose in the form of covering is obtained. This lamination process is available in the related art.

As also seen in the figure, the laminated fabric from the lamination unit (2) arrives chemical agent application unit (3) . The unit has rotary templates used for designing/printing. The templates prepared appropriate for desired designs and fabric are subjected to burning/corrosive chemical application. Thus the burning chemicals are not applied to entire fabric but for giving the desired design. Therefore, it is ensured that the parts subjected to chemical application are worn but other areas are not. Then, drying process is applied in I. drying unit (4) by means of applying hot air.

The fabric subjected to corrosive/burning chemicals is taken into condense unit (5) following drying in the I. drying unit (4). Here air of about 150 °C temperature is applied. The corrosive/burning chemicals applied to the fabric goes into reaction with the fabric by help of hot air and burning/corrosion process is realized. Thus the chemicals applied areas are worn but other parts remain non-worn and desired design is obtained. Burning-corrosion process is realized in this unit (5). The fabric is condensed here by use of hot air.

The worn/burnt fabric in the condense unit (5) is subjected to washing in washing unit (6) to remove the burnt/worn parts. Cold and hot water is used for washing here. After washing, it is dried with hot air in final drying unit (7). After drying, the said lamination fabric is a design lamination printing.

The protection area of this application has been specified under claims and cannot be limited to the descriptions given as sampling above. It is clear that any innovation can be provided by a person skilled in the related art by use of the similar embodiments and/or can also apply this embodiment in other areas for similar purposes used in the related art. Therefore, such embodiments will be lack of innovation criteria.

## Claims

1. The invention relates to a design lamination fabric production method applied to fabric mixtures of polyester + cellulose (cotton, viscose) consisting of lamination of the fabrics in lamination unit (2), wherein, it comprises the following steps;
- application of chemicals as appropriate to the designs to be preferably applied to the fabrics laminated to each other in the chemical agent application unit (3),
- Application of burning/corrosion process by means of reaction of laminate fabric subjected to dried chemical application with hot air in the condense unit (5).

2. A design lamination production method according to claim 1, wherein, the laminated fabric is dried in I. drying unit (4) after application of chemical.

3. A design lamination production method according to claim 1, wherein, the chemical agent to be applied in chemical agent application unit (3) is of burning/corrosive feature.

4. A design lamination production method according to claim 1, wherein, a chemical agent of burning/corrosive feature is applied in the chemical agent unit (3) by means of templates of preferably designs to be applied.

5. A design lamination production method according to claim 1, wherein, the fabric reacted with chemicals and hot air of about 150 °C in condense unit (5) is washed in washing unit (6) and burnt/corroded parts are removed.

6. A design lamination production method according to claim 1, wherein, the fabric whose burnt/corroded parts are removed in washing unit (6) is dried in final drying unit (7).

7. The invention relates to a design lamination fabric production unit applied to polyester + cellulose (cotton, viscose) mixture fabrics and consisting of a lamination unit (2) where the fabrics are laminated , wherein, it comprises of chemical agent application unit (3) the laminated fabrics are subjected to chemical agents appropriate to the design to be applied preferably, condense unit (5) wherein chemical agent applied laminated fabric is subjected to burning/corrosion process by means of reaction of the fabric with hot air.

8. A design lamination production unit according to claim 7, wherein, it comprises of I. drying unit (4) where the lamination fabric is dried after chemical agent application.

9. A design lamination production unit according to claim 7, wherein, it comprises of washing unit (6) wherein the fabric subjected to burning is washed and cleaned of burnt/corroded parts.

10. A design lamination production unit according to claim 7, wherein, it comprises of final drying unit (7) where the fabric whose burnt/corroded parts are removed in the said washing unit (6) is dried.
